# EUROPEAN PATENT APPLICATION

(11) **EP 4 223 473 A1**
(43) Date of publication of application: **09.08.2023**
(21) Application number: 22158795.9
(22) Date of filing: 25.02.2022
(51) Int. Cl.: B28B 11/10, B28B 11/08, B28B 11/24, E04C 2/06, B28B 1/52

(54) **A METHOD OF PROVIDING A PLANAR FIBER CEMENT SHEET**

(30) Priority: 08.02.2022 EP 22155640
(71) Applicant: Scheerders van Kerchove's Verenigde Fabrieken, 9100 Sint-Niklaas (BE)
(72) Inventor: Van Oeteren, Jacques, 2070 Zwijndrecht (BE); Babaei, Saeid, 2610 Wilrijk (BE)
(74) Representative: IP HILLS NV

(57) **Abstract**

A method of providing a planar fiber cement sheet is provided. The method comprises the steps of:
• providing a fiber cement green sheet (111) having a top (112) and bottom side;
• compressing the fiber cement green sheet (111) between an upper (131) and a lower (133) mould element of a flat press (130), the top side (112) of the fiber cement green sheet (111) contacting the upper mould element (131) and the bottom side of the fiber cement green sheet (111) contacting the lower mould element (133);
• curing the compressed fiber cement green sheet (113) thereby providing a planar fiber cement sheet.

The surface (132) of the upper mould element (131) of the flat press (130) is a textured surface.

## Description

### Field of the Invention

The present invention generally relates to methods to provide a planar fiber cement sheets, in particular methods to provide a planar fiber cement sheets having a textured first side or surface.

### Background of the Invention

Planar fiber cement sheets and its production in general is known. There are two major types of fiber cement sheets, i.e. air cured fiber cement sheets and autoclave cured fiber cement sheets.

Methods to product planar fiber cement sheets using autoclave curing are known, e.g. from the video of Discovery and Science Channel: "How It's Made Fibre Cement Siding episode" available on YouTube, https://www.youtube.com/watch?v=LuxGDH9KVLM. Fiber cement green sheets are made by a Hatschek machine, and stacked one to the other, after which the stack is cured in an autoclave under increased temperature and pressure. One side or surface of the fiber cement green sheets may be provided with a texture, e.g. a wooden texture, by imprinting the texture in the surface by a roll, on which the texture is available, immediately after the fiber cement green sheet has left the forming drum of the Hatschek machine.

Methods to product planar fiber cement sheets using air curing are also known. In general, after creating planar fiber cement green sheets by the Hatschek machine, a stack of such green sheets is made where the green sheets are separated by metal plates. This stack of green sheets and metal plates is compressed in a stack press, to squeeze out excess of water present in the green sheets and to increase the density. The compressed fiber cement green sheets are thereafter dried, un- and restacked while removing the metal plates from between the compressed green sheets and cured to the air. In WO2017191319A2, a general method to provide flooring elements, being planar fiber cement sheets is described. Alternatively, CN104708842 describes a machine to produce planar fiber cement sheets where the fiber cement green sheets are compressed individually. The fiber cement sheets are air cured but providing planar fiber cement sheets having even surfaces.

### Summary of the Invention

There is still the need to a method to produce planar fiber cement sheets, preferably air cured planar fiber cement sheets, having at least one textured surface, which method is energy efficient, which provides planar fiber cement sheets uniformly and with a small deviation on thickness of the cured fiber cement sheet, and/or where it is easy and simple to change the texture provided to the planar fiber cement sheets.

According to a first aspect of the present invention, a method to provide a planar fiber cement sheet is provided. The method comprises the steps of
- providing a fiber cement green sheet having a top and bottom side;
- compressing the fiber cement green sheet between an upper and a lower mould element of a flat press, the top side of the fiber cement green sheet contacting the upper mould element and the bottom side of the fiber cement green sheet contacting to the lower mould element;
- curing the compressed fiber cement green sheet thereby providing a planar fiber cement sheet.

The surface of the upper mould element of the flat press is a textured surface.

Hence the surface of the upper mould element of the flat press contacting the top side of the fiber cement green sheet is a textured surface. A flat press is a press where a product is compressed between two planar sheets, the first planar sheet being the surface of the upper mould element, this upper mould element usually comprising a ram. The second planar sheet is the surface the lower mould element. This lower mould element usually comprises a bolster. The maximum distance between these surfaces of lower and upper mould element, e.g. between the surfaces of the ram and the bolster, is referred to as "daylight" The height between these outer surfaces, e.g. of the ram and the bolster, when the press is closed, is referred to as "shut height".

The upper mould element is a planar element having a textured surface, hence being uneven and provided with a texture, also referred to as profile or relief. This may be a texture representing e.g. a natural outlook, like a wood-texture outlook, or a geometrical relief or design, or any other structured or unstructured relief or design. The lower mould element is also a planar element, which typically has a flat or even surface.

A planar fiber cement sheet is also referred in the art as a flat fiber cement sheet, i.e. having a generally planar form. This known term in the art distinguishing the planar sheets from corrugated fiber cement sheets, having an undulated surface at both sides of the fiber cement sheet, thereby providing a waved cross section having a series of alternating grooves and ridges.

A fiber cement green sheet is also known in the art, being the fresh sheet of fiber cement material as formed by the machine transforming and shaping the fiber cement slurry into a flat shape.

According to some embodiments, during the compression step, water may be squeezed from the fiber cement green sheet over and/or through the surface of the lower mould element. According to some embodiments, during the compression step, the density of the fiber cement green sheet may be increased, as an example by an increase in the range of 15 to 50%. This % is calculated by dividing the increase in absolute value, by the density in absolute value of the product before compression and expressing this ration in a percentage (multiplied by 100). The density of the fiber cement green sheet prior to compression may be in the range of 1200 to 1600 kg/m³, whereas after compression, the density of the compressed fiber cement green sheet may be in the range of 1650 to 2000 kg/m³.

To allow water to pass over and from the surface of the lower mould element of the flat press, this surface may comprise draining channels extending from the inner surface of the lower mould element to the side of the lower mould element where the channels debouch. More preferred, the lower mould element is also an element being water permeable, e.g. by providing perforations through the lower mould element. The lower mould element may be provided with channels and/or perforations allowing water to pass to the opposite, lower side of the lower mould element. Preferably the bolster or bolster block, may be provided with channels, in the bottom of the channels, perforations being provided, allowing water to pass to the opposite, lower side of the lower mould element. Hence the bolster of the lower mould element may be a solid block, like a solid metal block, being provided with a substantially flat surface in which draining channels extending from the inner surface of the bolster to the side of bolster are provided. The bolster may further comprise perforations from the bottom of the channels to the lower side of the solid block, and hence the lower side of the lower mould element. Possibly, the water is removed from the fiber cement green sheet, via the channels and/or perforations, by providing an under pressure (also referred to as vacuum) to the channels and/or perforations at the lower side of the lower mould element. As such the water may be sucked out and/or may be removed from the fiber cement sheet and the lower side of the lower mould element.

Possible drain channels may be channels with a width in the range of 2mm to 10mm and a depth in the range of 2mm to 20mm. The drain channels may be oriented parallel to the short side or parallel to the long side of the fiber cement green sheet positioned in the flat press. The drain channels preferably have a polygonal cross section, such as a rectangular cross section. The channels are preferably perforated along the length of the bottom of the channels. The perforation holes are preferably circular and having a diameter preferably in the range of 2mm to 10mm. According to some embodiments, the lower mould element, like the bolster, may be free of draining channels, but may be provided with perforation holes, preferably being circular and having a diameter preferably in the range of 2mm to 10mm.

The lower mould element preferably comprises a substantially flat solid plate resting on the upper side of the bolster and covering the possible channels and/or perforations in the bolster. The flat solid plate may be provided with perforation holes. The perforation holes are preferably circular and having a diameter preferably in the range of 2mm to 10mm. The positions of the holes in the flat solid plate preferably align with the channels and/or perforations in the bolster. I.e. the holes in the flat solid plate are provided where the channels and/or perforations in the bolster are present.

Alternatively or additionally, the upper side of the bolster may be covered with a grid-like sheet being provided on top of the bolster or if applicable the upper side of the substantially flat solid plate, thereby providing the lower mould element a flat surface.

In case perforations are provided in the bolster and/or the solid plate, these perforations may preferably be circular, having a diameter in the range of 2mm to 10 mm. The usually circular perforations may be oriented matrix-like or according to a checkerboard pattern over the surface of the lower mould element. The centre-to-centre distance of the perforations may be in the range of 3mm to 60mm, such as in the range of 5mm to 40mm. Possibly 625 to 40000 perforations are provided per square meter of surface of the lower mould element

According to some embodiments, the lower mould element of the flat press comprises a bolster, a solid and perforated plate being provided or laid on the bolster, and a grid-like sheet, the surface of the lower mould element of the flat press is provided by a grid-like sheet laid on this solid perforated plate. The bolster may comprise draining channels and optionally perforations from the bottom of the channels to the lower side of the bolster.

A plate being a solid plate is to be understood as a plate which will not deform during a pressing action of the press.

The grid-like sheet may lay on the top of the solid plate, being part of the lower mould element. The provision of a grid-like sheet avoids the creation of large uninterrupted contact zones between the second side of the fiber cement green sheet and the surface of the lower mould element. During or after compression, the cementitious material of the fiber cement green sheet may remain stuck to the lower mould element along such larger contact zones. The provision of a grid-like sheet avoids such sticking of the fiber cement green sheet and the surface of the lower mould element.

Possible grids-like sheets are wire meshes, such as metal or even stainless steel wire meshes, having a mesh number typically in the range of 300 mesh to 20 mesh, like 300 mesh to 50 mesh, e.g. in the range of 100 mesh to 20 mesh (a mesh number means this number of openings being provided per inch across the grids-like sheet).

As an alternative, a water permeable fleece or felt may be used to cover the solid plate. This fleece or felt may be an endless or continuous belt, laying and optionally passing between the fiber cement green sheet and the upper surface of the lower mould element, e.g. the bolster, and most preferably a bolster provided with perforations to allow water to pass to the opposite side of the lower mould element.

More preferably, the lower mould element of the flat press may comprise a bolster, preferably a bolster provided with perforations, and a water permeable felt laid or positioned on this bolster, thereby providing the surface of the lower mould element of the flat press. The bolster may comprise perforations from its surface to the lower side of the bolster.

The provision of draining channels, perforations, a grid-like sheet and/or felt or fleece, may provide typical traces on the second side of the fiber cement green sheet, like imprints of the channel, the perforation the grid-like structure and/or the outer surface of the felt or fleece. These imprints remain visible on this second side of the planar fiber cement sheet after curing. This in contrast to cured planar fiber cement sheet being provided, optionally textured, by means of stack pressing, where the metal plates at the surface contacting the lower side of the uncured planar fiber cement sheet are flat and smooth and are oiled to avoid sticking of the cementitious material to the metal plates.

According to some embodiments, the press may comprise a first carousel, being a carousel of shuttles or frames, the shuttle or frame carrying the perorated sheet, with on top optionally the grid-like sheet or the fleece or felt, thereby providing the uppermost side of the frame or shuttle. When provided in the press, this perorated sheet, the grid-like sheet or the fleece or felt provides the upper surface of the lower mould element. The fiber cement green sheet is provided on the uppermost side of the frame or shuttle. This combination is transferred into the press (between the bolster and the upper mould element), preferably in production direction, and placed resting on the bolster, preferably a bolster provided with channels and/or perforations, before the compression takes place. After the compression, the shuttle or frame, carrying the compressed fiber cement green sheet, is moved out of the press from between the bolster and the upper mould element. The compressed fiber cement green sheet may be taken from the shuttle or frame, and the elements on the shuttle or frame, like the perorated sheet and/or the grid-like sheet and/or the fleece or felt, may be taken from the shuttle of frame and cleaned, while the frame or shuttle returns to the intake side of the press. Alternatively, the frame or shuttle with the perorated sheet and/or the grid-like sheet and/or the fleece or felt, is circulated back to the intake side of the press, where it is used to receive another fiber cement green sheet. during transfer from output side of the press to the input side of the press, the frame or shuttle, the perforated sheet, the grid-like sheet and/or the fleece or felt may be washed, e.g. using high pressure water.

According to the invention, the fiber cement green sheets are single pressed, i.e. they are pressed one by one between the surfaces of the planar upper and lower mould element of a flat press. During this pressing, excessive water in the cement composition of the fiber cement green sheet is pressed out of the sheet, while the density of the fiber cement sheet is increased. Simultaneously, at the first side of the fiber cement green sheet, the texture of the surface of the upper mould element of the flat press is mirrored in the first side or surface of the fiber cement green sheet, thereby providing a textured first side to the compressed fiber cement green sheet. After curing and further treating of the fiber cement sheet, a textured first side is provided to the planar fiber cement sheet. The texture pressed in this first side of the fiber cement green sheet is a more detailed mirror image of the texture on the surface of the upper mould element as compared to profiling using a stack press and textured metal sheets between the fiber cement green sheets in this stack. The texture pressed in this first side of the fiber cement green sheet is uniformly repeated in consecutive compressed fiber cement green sheet, as compared to profiling using a stack press and textured metal sheets between the fiber cement green sheets in this stack. Also the quality of the texture in consecutive compressed fiber cement green sheets is larger and more uniform. The tolerances on the average thickness of the fiber cement green sheet are narrower as compared to the tolerances in the thickness of the fiber cement green sheet made by stack pressing.

This single pressing also allows a faster production of compressed fiber cement green sheets, as water can be squeezed out and density can be increased more rapidly as compared to stack pressing. The method may allow a rapid change of texture being pressed in the first surface of the fiber cement green sheet. It was also found that the energy used to compress the fiber cement green sheets is more efficiently used, i.e. less energy is used per compressed fiber cement green sheet as compared to stack pressing.

According to some embodiments, the upper mould element of the flat press may comprise a solid block, the outer surface of this solid block providing the textured surface.

Most preferably the upper mould element of the flat press comprises a solid metal block or "ram plate" or "ram block".

According to some embodiments, the upper mould element of the flat press may comprise a solid plate, the textured surface of the upper mould element of the flat press is provided by a textured sheet provided on this solid plate.

The textured surface of the upper mould element of the flat press is provided by a textured sheet provided being provided on the lower surface of the solid plate. The textured sheet may be provided between the solid block of the upper mould element and the first side of the fiber cement green sheet. In this case, the solid block of the upper mould element may have a flat surface, which is hence covered by the textured sheet.

According to some embodiments, the textured sheet may be a metal or metallic sheet.

According to some embodiments, the textured sheet may be a polymeric sheet. According to some embodiments, the textured sheet may be a rubber sheet.

The sheet provided on this upper mould element of the press is textured, at least on the side facing away from other parts of the upper mould element. The sheet provided on the solid block of the press is textured, at least on the side facing away from the solid block.

Possibly the textured sheet is a metal sheet, like a stainless steel sheet. In case the solid plate of the upper mould element is also provided from metal, the solid block, or other elements of the upper mould element, and the metal sheet may be connected one to the other by magnetic elements.

Alternatively, the textured sheet may be a polymeric sheet, like a polymeric sheet being provided from two component PU, a rubber sheet, or any synthetic material which can be textured and resist to the pressure of the press. Possibly the polymeric sheet comprises glass fibers to reinforce the polymeric matrix. The thickness of this polymeric sheet may preferably range from 2mm to 20 mm. In case a solid block of the upper mould element is provided from metal, the polymeric sheet may be provided with magnetic elements at the side opposite to the textured side. The solid block and the polymeric sheet may be connected one to the other by these magnetic elements. Optionally, other elements of the upper mould element and the polymeric sheet may be connected one to the other by these magnetic elements.

Preferably the polymeric sheet is a rubber sheet, with a shore hardness of 10 to 100 Shore D. The thickness of this rubber sheet may preferably range from 2mm to 20mm. Preferably a nitrile butadiene rubber (NBR) sheet may be used.

In order to prevent, to a large extent, sticking of the fiber cement green sheet to the textured sheet, in particular in case the textured sheet is made of a metal or metallic material, a polymeric film may be provided between the textured surface of the textured sheet and the first side of the fiber cement green sheet. This film may be provided from polymeric material and may have a thickness in the range of 0.5mm to 3mm. The film may be wound on a roll, a fresh part of the film being unrolled and positioned between the textured sheet and each of the fresh fiber cement green sheets, in front of the textured sheet. After compression of the fiber cement green sheet, the used part of the film may be removed and coiled up at the other side of the press, while a fresh part of the film is positioned between the next fresh fiber cement green sheet and the textured sheet in the press. The film is wound and unwound coil-to-coil. In a similar way, in order to prevent to a large extent sticking of the fiber cement green sheet to the textured polymeric sheet or even to the rubber textured sheet, such intermediate film may be used. Alternatively, the film may be provided and laid on the first surface of the fiber cement green sheet, as a sheet of film, or as a fresh part of a film being unrolled and positioned between the fresh fiber cement green sheet and the textured sheet, in front of the first surface of the fiber cement green sheet. In the latter case, after compression of the fiber cement green sheet, the used part of the film may be removed and coiled up at the other side of the press, while a fresh part of the film is positioned between the next fresh fiber cement green sheet and the textured sheet, in front of the first surface of the next fiber cement green sheet.

The textured sheets may be held by a frame, e.g. encompassing the perimeter of the textured sheet being held, and preferably being larger or encompassing the perimeter of the element contacting the textures sheet at the other than the textured surface, e.g. a solid block being part of the upper mould element. This frame may be used to facilitate replacing textures sheets in the flat press.

Alternatively, the press may comprise a further, optionally a second, carousel circulating textured sheets. Preferably a press comprising a first carousel of shuttles or frames is combined with this further carousel. In the case of a press comprising two carousels, the textured sheet is laid on top of the fiber cement green sheet which is resting on the uppermost surface of the shuttle or frame of the first carousel at the intake side of the press. The textured sheet, being part of the upper mould element, is carried into the press opening where it provides the lowermost side of the upper mould element for contacting the fiber cement green sheet. Once positioned, the textured sheet is contacted by a ram when the press closes. As such a texture is pressed in the upper or top side of the fiber cement green sheet. After the compression, the shuttle or frame, including the textured sheet, is taken out of the press, and the textured sheet is removed from the fiber cement green sheet, preferably before the compressed fiber cement green sheet is removed from the shuttle of frame. The textured sheets are recirculated to the intake side of the press, optionally after being cleaned, e.g. by high pressure water, for being laid again one fresh fiber cement green sheet. Or being oiled

According to some embodiments, the flat press may comprise a plurality of upper mould elements, the surface of at least one of the plurality of upper mould elements is a textured surface, the upper mould elements being interchangeably positionable above the lower mould element. According to some embodiments, the flat press may comprise a plurality of textured surfaces, the textured surfaces, being interchangeably positionable above the lower mould element. Possibly the flat press may a plurality of textured surfaces each held by a frame, the frames being interchangeably positionable such that a textures sheet is positioned above the lower mould element.

Hence two, three, four or even more upper mould elements, textures sheets or frames, each holding a textured surface, may form part of a train or carrousel of such elements, one of the plurality of upper mould elements, textured sheets or frames may be positioned or rotated in front of, i.e. above, the lower mould element, while the other upper mould elements, textured sheets or frames are positioned away from the lower mould element. This provides the possibility to change the textures surface of the upper mould parts which are not in position above the lower mould part, while the flat press may continue its pressing activity. As such the solid blocks with textured surface or the sheets provided on the solid plate may be removed from and provided to the upper mould elements during the continued press activity of the flat press, avoiding downtime of the production.

According to some embodiments, the flat press may comprise a plurality of upper mould elements, the surface of each of the plurality of upper mould elements is a textured surface, the upper mould elements being interchangeably positionable above the lower mould element.

The provision of a plurality of upper mould elements, the surface of each of the plurality of upper mould elements being a textured surface, has the advantage that the produced textures on the fiber cement green sheets can be changes rapidly and without interruption of the production.

According to some embodiments, the upper mould element of the flat press may comprise a solid block, the textured surface of the upper mould element of the flat press is provided by a textured film provided in front of said solid block.

Similarly as for the use of sheets, a textured film, preferably a textured polymeric film may be provided in front of the upper mould element, e.g. the solid block of the upper mould element, before the press closes for pressing. After pressing, the film may stay in place for one or more subsequent fiber cement green sheets, or the film may be changed, optionally only partially, to a consecutive part of the textured film. The textured film may be wound on a roll, a fresh part of the film being unrolled and positioned between the fresh fiber cement green sheet and the solid plate of the upper mould element. The textured film is hence provided roll-to-roll. After compression of the fiber cement green sheet, the used part of the film, or a part of this used part, may be removed and coiled up at the other side of the press, while a fresh part of the textured film is positioned between the next fresh fiber cement green sheet and the solid plate of the upper mould element. Preferably a textured rubber film is used.

The flat press may preferably be a hydraulic press, or mechanical press with the possibility to give a specific pressure on the sheet between 5N/mm² and 25N/mm²

The maximum specific pressures used by the flat press to individually compress the fiber cement green sheets may be in the range of 5 N/mm² and 25 N/mm². More preferred, the maximum specific pressures used to individually compress the fiber cement green sheets may be in the range 5 N/mm² and 25 N/mm².

This maximum pressure may be applied during a given time lapse, such as a period of 0 seconds and 40 seconds, more referred during a time period of 0 to 30 seconds, the lower limit being excluded.

The pressure applied to the fiber cement green sheet may follow a defined pressure profile during the time period applying any pressure to the fiber cement green sheet. the pressure profile may comprise at least three phases, being a pressure build-up period or phase, a maximum pressure period or phase and a pressure decreasing period or phase.

The pressure build-up period may take e.g. between 2 seconds and 40 seconds, during which the pressure is raised from 0 N/mm² to the maximum pressure. The pressure build up may be performed stepwise, using steps of 2 bar to 50bar of pressure increase. Alternatively or in combination with stepwise increasing the pressure, the pressure may be gradually increased, using a pressure increase of 2 bar to 50 bar/second, e.g. using a pressure increase of 1.25 to 20 bar/second.

The pressure decreasing period may take e.g. between 0 to 20 seconds, such as between 0.1 to 40 seconds, during which the pressure is lowered from the maximum pressure applied to 0 N/mm². The pressure decrease may be performed stepwise, using steps of 2 bar to 50bar of pressure decrease. Alternatively or in combination with stepwise decreasing the pressure, the pressure may be gradually decreased, using a pressure decrease of 2 bar to 50 bar/second, e.g. using a pressure decrease of 2.5 to 30 bar/second. Possibly the flat press is controlled such a pre-set shut height is reached when the press is closed.

The fiber cement green sheet may be provided using a Hatschek machine, as known in the art. The fiber cement green sheet is the slab of fiber cement as taken from the forming drum of the Hatschek machine. Alternatively the fiber cement green sheet may be provided by a flow-on process or by a process using a filter press.

The fiber cement green sheet may be cut on size prior to the compression step, or after the compression step. Cutting on size before compression is preferred. Cutting may be done by e.g. high pressure water cutting, or by use of a mechanical cutting device, such as by one or more rotating knife, passing over or under, and rotating though the fiber cement green sheet in the cutting direction, e.g. the direction parallel and/or perpendicular to the direction of production. Alternatively the fiber cement green sheet may be cut by guillotine knives, cutting on a belt or on a metal plate or plates.

The fiber cement green sheet may have a dimension in the range of 400 mm to 1500 mm wide by 400 mm to 4000 mm length. The width of the fiber cement green sheet is the dimension of the sheet between the two edges, measured in the direction perpendicular to the direction of production of the fiber cement green sheet. The length of the fiber cement green sheet is the dimension of the sheet between the two edges, measured in the direction of production of the fiber cement green sheet. The width is typically the smaller dimension of the width and length.

After compression, the fiber cement green sheet may be cut in smaller fiber cement segments, such as segments which may later provide fiber cement plates, planks, sidings, floor or roof tiles or slates, or façade elements.

According to some embodiments, the compressed fiber cement green sheet may be cured by air curing.

Though air curing is preferred, alternatively, the compressed fiber cement green sheet may be autoclave cured.

According to some embodiments, the compressed fiber cement green sheet may be cured by autoclave curing.

According to some embodiments, the compressed fiber cement green sheet may be cured by exposing the compressed fiber cement green sheet to CO₂. The compressed fiber cement green sheet may be cured by exposing the compressed fiber cement green sheet to CO₂, in an atmosphere comprising more than 1000 ppm of CO₂. The compressed fiber cement green sheet may be cured by exposing the compressed fiber cement green sheet to CO₂ in an atmosphere comprising water and CO₂, the atmosphere comprising CO₂ in a range of 10 % to 90%. The atmosphere may be at a relative humidity in the rage of 45% to 100%. Relative humidity is the ratio of how much water vapour is in the air and how much water vapour the air could potentially contain at a given temperature, with 100% relative humidity being fully saturated air 0% being fully dried air. The atmosphere may be at a pressure in the range of 0 barg to 20 barg, like in the range of 0 barg to 15 barg. The atmosphere may be at a temperature in the range of ambient to 150°C, in the range of ambient to 100°C. Ambient temperature is 20°C. "Barg" means the pressure above ambient pressure. 0 barg means at ambient pressure. Possibly the compressed fiber cement green sheet may be cured by exposing the compressed fiber cement green sheet to CO₂ in a chamber, like a closed chamber, in which CO₂, like 99% pure is injected, to achieve the required atmosphere, like an atmosphere with a CO₂ content of more than 1000 ppm. According to some embodiments, the compressed fiber cement green sheet may comprise CO₂ curable cement, like set out in WO2016154021. CO₂ curable cement is made available by Solidia technologies Inc., NJ, USA.

The cured planar fiber cement sheet may be provided with a finishing step, like coating the textured side of the planar fiber cement sheet with a coloured, translucent or transparent coating, which coating may provide water repellence. The planar fiber cement sheets obtained according to the methods of this invention has the advantage that the tolerances on the thickness of the planar fiber cement sheets prior to coating is narrower as compared to planar fiber cement sheets provided by stack pressing. Therefore, a grinding of the stack pressed planar fiber cement sheets prior to coating may be avoided, which results in a higher processing efficiency and even avoiding of energy consumption during grinding.

The thickness of the planar fiber cement sheets obtained according to the methods of this invention may have a maximum thickness in the range of 4mm to 30mm after pressing with an inter-sheet tolerance of plus or minus 0.1 to 1 mm for consecutive sheets being produced. Hence the method according to the invention leads to a uniform production of planar fiber cement sheets provided with a textured first side. The maximum thickness is the distance between the outer parts of the texture on the first side and the second side of the planar fiber cement sheet.

The type of texture, or relief, provided to the first side of the planar fiber cement sheet may vary to a large extent. The maximum depth of the relief, this is the difference in height between the lowest point of a recess and the highest point of a protrusion, may, as an example, be in the range of 0.1 to 5 mm, e.g. in the range of 0.3 to 2 mm.

For planar fiber cement sheets being stack pressed, the maximum dimension of zones on the surface being above or under the average thickness, is to be kept relatively small. The maximum dimension is to be understood as the maximum length of a linear line between two points at the altitude line at average thickness of the sheet, which line is not interrupted by any other point of this altitude line. Too large maximum dimensions cause the metal separation sheets to be plastically bended, damaged or even broken during pressure, or cause the texture to be imprinted incorrectly. This because a number of zones at high or low altitude are stacked aligned, i.e. one on top of the other. Thereby zones in the stack where either too much or too little fiber cement are present prohibiting proper pressing. Typically the maximum distance for stack pressing is to be less than 50 mm. Planar fiber cement sheets are not subject to this limitation. Any kind or texture or figure can be imprinted. Even images or large figures can be imprinted in the top side of the planar fiber cement sheet.

The texture provided to the textured first side of the planar fiber cement sheet may e.g. be a wood texture, a textile texture, a natural stone texture, like a texture of natural slate and alike. The relief or texture may even provide anti-slip properties to the textured first side of the planar fiber cement sheet.

The fiber cement composition of the fiber cement green sheet may comprise cement, like hydraulic cement, like OPC or CO₂ curing cement, natural fibers, such as refined cellulose fibers, polymeric or mineral fibers like reinforcement fibers, e.g. polyvinyl alcohol (PVA), polyamide (PA) or polyester (PES) fibers or polypropylene and/or glass fibers, fillers like CaCO₃, mica, micro silica, wollastonite, perlite, Aluminium hydroxide, silica or other silicate source components, like sand, colorants, antioxidants, and any other applicable additives, and combinations thereof. Preferably, the fiber cement composition of the fiber cement green sheet comprises cement, CaCO₃, cellulose, PVA fibers, micro silica, wollastonite, mica, perlite, Aluminium hydroxide, silica, colorants or pigments, or any other additive known in the art, as well as combinations thereof. As a mere example, the fiber cement green sheet may comprise next to water, 50 to 85%w of cement for air cured products, and 30 to 55%w of cement for autoclave cured products, next to CaCO₃ in the range of 0 to 20%w, cellulose fibers in the range of 1 to 5%w, PVA fibers in the range of 0 to 4%w, micro silica in the range of 0 to 10%w, a combination of one or more of the group consisting of wollastonite, mica and perlite in the range of 0 to 10%w, aluminium hydroxide in the range of 0 to 10%w and silica in the range of 0 to 40%w. This %w is based upon the weight fiber cement matrix without water, the ranges being inclusive.

Prior to the compression by the flat press, the water content of the fiber cement green sheet is in the range of 2%w to 30%w, such as in the range of 15%w to 25%w. After the compression by the flat press, the water content of the compressed fiber cement green sheet is reduced to less than 20%w, e.g. to less than 17%w, e.g. in a range of 12%w to 16%w. These percentages are weight percentages, expressed as the weight of the water over the total weight of the wet mass in which the water is present. After compression, the thickness of the uncured but compressed fiber cement green sheet may be in the range of 4 to 30mm.

Hence according to some embodiments, during compression in the flat press, the water content of the fiber cement composition of the fiber cement green sheet may be reduced to less than 20%w.

According to some embodiments, during compression in the flat press, the density of the fiber cement composition of the fiber cement green sheet may be increased to more than 1400 kg/m³, such as in the range of 1650 to 2000 kg/m³.

According to a second aspect of the present invention, a planar fiber cement sheet is provided. The planar fiber cement sheet is provided by a method according to the first aspect of the invention.

The planar fiber cement sheets according to the invention may be identified by the presence of traces or marks on the backside of the planar fiber cement sheets, pointing to the presence of the gris-like structure, perforation holes and/or draining channels which were present in or on the lower mould element during pressing.

The planar fiber cement sheets may be used for various purposes. The planar fiber cement sheets may be used in particular for outdoor applications. The planar fiber cement sheets may be provided as slates or tiles, like floor or roof tiles. The planar fiber cement sheets may be provided as sidings, to be used for e.g. cladding. The planar fiber cement sheets may be provided as plates adapted to cover facades and walls. The planar fiber cement sheets may be used for inside applications, like wall coverings (e.g. in dry or wet rooms like bathrooms and kitchens), flooring elements, doors, parts of furniture, like doors or drawers of furniture (e.g. in bathrooms or kitchens) and alike.

In the context of this invention, when reference is made to a range and unless otherwise expressed, the range is inclusive, i.e. the end limits of the range are included.

### Brief Description of the Drawings

Fig. 1 illustrates schematically a process according to the first aspect of the present invention.
Fig. 2, 3, 4, 5 and 6 illustrates schematically cross sections of a presses used in the process illustrated by figure 1.
Fig. 7 illustrates schematically a top view of the press of figure 6.

In the different figures, the same reference signs refer to the same, analogue or a similar feature in the figures.

### Detailed Description of Embodiment(s)

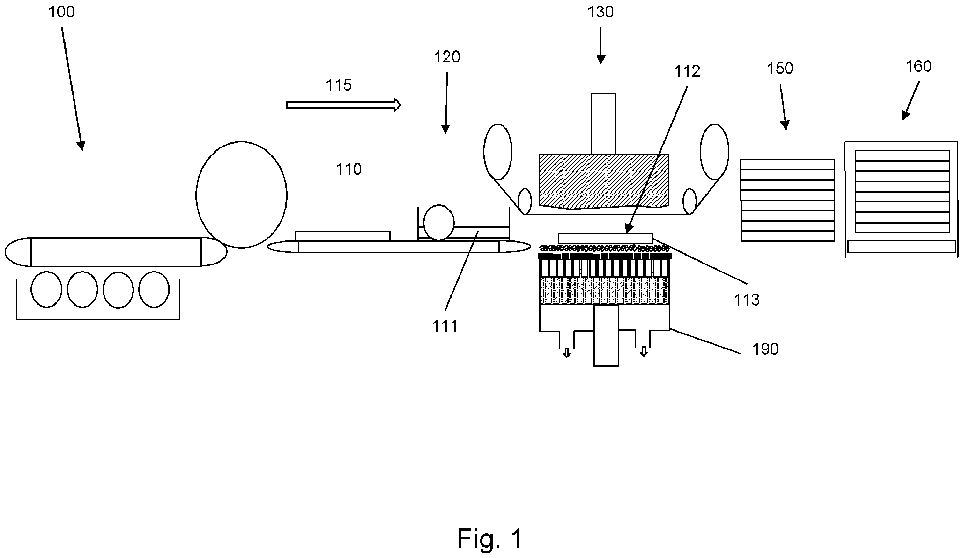

A device for executing a method according to the present invention, is shown schematically in figure 1. Fiber cement green sheets 110 are provided by means of a Hatschek-machine 100. On the forming drum, fresh layers of fiber cement are accumulated until the required layer thickness is provided on the drum. The accumulated layers are removed from the drum as a fiber cement green sheet 110.

As an example, the composition of the fiber cement present in the fiber cement green sheet is, next to water, 50 to 85%w of cement (OPC), CaCO3 in the range of 0 to 20%w, cellulose fibers in the range of 1 to 5%w, PVA fibers in the range of 0 to 4%w, micro silica in the range of 0 to 10%w, a combination of one or more of the group consisting of wollastonite, mica and perlite in the range of 0 to 10%w, aluminium hydroxide in the range of 0 to 10%w and silica in the range of 0 to 40%w. The uncompressed fiber cement green sheet has an average thickness of about 5 to 35mm. The water content of the fiber cement composition is about 25%w. The density of the fiber cement green sheet is about 1400 kg/m³.

The fresh fiber cement green sheet is transferred in production direction 115 by means of a transport belt, to a cutting station 120, where the fiber cement green sheet 110 is cut on size. Rotating knifes are used to cut the fiber cement green sheet in the direction of production, guillotine knives, cutting on the transport belt, are used to cut the fiber cement green sheet traverse the direction of production. Alternatively high pressure water cutting may be used.

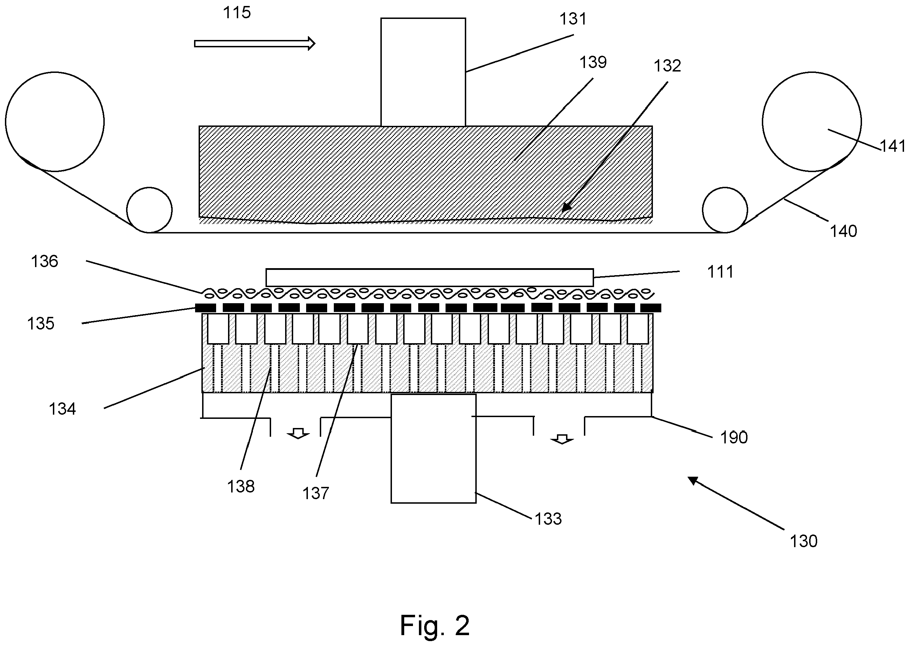

The fiber cement green sheet cut on size111, is now brought between a hydraulic flat press 130. More details of the press 130 are shown in figure 2. The fiber cement green sheet is pressed by this flat press 130, thereby pressing a texture in the upper, top side 112 of the fiber cement green sheet 111. The texture may provide the compressed fiber cement green sheet with a surface resembling the outlook of a slate or may provide the compressed fiber cement green sheet with a surface resembling the outlook of e.g. a woven textile surface. Alternatively the texture may be an imprint of a figure, image, picture or alike on the surface of the compressed fiber cement green sheet, e.g. as a bas-relief or a sunken relief or a combination of both. The thickness of the fiber cement green sheet 111 is reduced to about 4 to 25mm, and water was squeezed out of the fiber cement green sheet 111. A water content of about 17%w remains in the compressed fiber cement green sheet 113. The density of the fiber cement green sheet is increased to about 1650 kg/m³. Alternatively, the density of the fiber cement green sheet may be increased to about 2000 kg/m³.

The compressed fiber cement green sheet 113 is now stacked at a stacking station 150, and the stack of compressed fiber cement green sheets is air-cured under increased temperature of about 30 to70 °C in a drying tunnel 160, thereby providing planar fiber cement sheets.

A cross section of the press 113, the section being according to a plane parallel to the direction of production and perpendicular to the surface of the fiber cement green sheets, is shown in figure 2.

The flat press 130 comprises, from top to bottom, an upper mould element 131 being a solid metal block, which at its lower side 132 (contacting the fiber cement green sheets 111 during pressing), having a surface being textured. Under the fiber cement green sheet 111, a lower mould element 133 is provided. This lower mould element comprises a bolster 134, being a solid metal block. On this bolster, a perforated solid metal (stainless steel) plate 135 is provided, covering the surface of the bolster 134. The perforated solid metal plate 135 is covered by a stainless steel grid-like sheet, being a mesh 136 with mesh number in the range of 100 to 20. In the bolsters surface, drainage channels 137 are provided in a direction perpendicular to the direction of production 114. The bottoms of the channels 137 are provided with perforations 138, which allow water to run from the bottom of the channels 137 to the lower side of the bolster 134. The perforations in the solid metal plate 135 are provided preferably at the positions where the open sides of the channels are bridged and covered by the solid metal plate 135. Both in the solid metal plate 135 and the bolster, the perforations may have a circular cross section with a diameter of about 4 to 6mm. The perforations are matrix-like spaced and on a distance of about 10 to 15mm centre-to-centre. 40 to 60 channels of about 8 to 12mm width and 15 to 20mm depth are provided per linear meter in direction of production 115. Possibly, between the lower side 132 and the fiber cement green sheet 111, a thin polymer separation film or release liner 140 is provided to avoid sticking of the compressed fiber cement to the lower side 132 of the upper mould element 131. The thin polymer separation film or release liner 140 may be provided by a roll-to-roll winding mechanism 141, providing a fresh piece of polymer separation film or release liner 140 for each fresh fiber cement green sheet. The provision of the stainless steel mesh 136 avoids sticking of the fiber cement to the solid metal plate 135. During production of the planar fiber cement sheet according to the invention, prior to compression, a fiber cement green sheet 111 with is introduced in the opening, i.e. the daylight of the press. The press is closed and compressed using a pressing sequence wherein the pressure is ramping up from 0 to about 18 N/mm² in a period of about 5 to 20 seconds, e.g. about 5 to 10 seconds, keeping the pressure at about 18 N/mm² for about 5 to 20 seconds, e.g. about 6 to 8 seconds, and remove the pressure back to 0 during a period of 1 to 3 seconds. Water is squeezed out of the fiber cement matrix in the press 130 and is removed from the press 130 through the perforations and the channels. A negative imprint of the texture provided on the lower side 132 of the upper mould element 131 is provided on the top side 112 of the compressed fiber cement green sheet 113. During compression, the lower side of the lower mould element is subjected to a vacuum suction by suction means 190. The water leaving the green fiber cement sheet via the channels and perforations is sucked away.

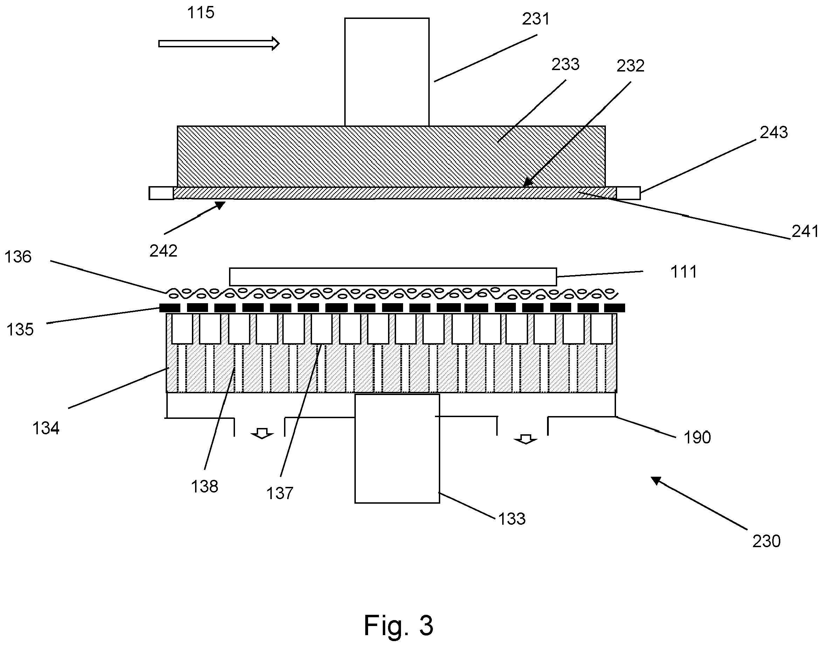

A cross section of an alternative press 230, the section being according to a plane parallel to the direction of production and perpendicular to the surface of the fiber cement green sheets, is shown in figure 3. The features with the same reference as in figure 2, refer to similar or identical features in figure 3.

The flat press 230 comprise an upper mould element 231 having a solid metal block 233, which at its lower side 232 has a flat surface. The lower mould element 133 is identical to the one in figure 2. Between the lower side 232 of the solid metal block 233, a textured rubber sheet 241 is provided. The rubber sheet may be a NBR sheet. The surface 242 of the rubber sheet 241 facing the green fiber cement sheet 111, is provided with a texture and provides the lower surface of the upper mould element 231. During compression, the negative imprint of the texture of the rubber sheet provided on the lower side 242 of the upper mould element 231 is provided on the top side 112 of the compressed fiber cement green sheet 113. A similar pressing sequence as used for the press 130 in figure 1 may be used. The rubber sheet 241 may be removed after being used to compress a pre-set number of fiber cement green sheets. The rubber sheet 241 may comprise at its side opposite to the textured side, magnetic elements, which allow the rubber sheet to stick to the upper mould element 231, which is typically provided from metal. Optionally the rubber sheets 241 are held by a frame 242 which is encompassing the surface of the upper mould element.

As an alternative, the textured rubber sheet 241 may be replaced by a textured metal sheet, like a textured stainless-steel sheet or a textured polymeric (optionally reinforced polymeric or composite) sheet. Possibly, between such textured metal (like stainless steel) sheet and the fiber cement green sheet 111, a thin polymer separation film or release liner 140 may be used to avoid sticking of the compressed fiber cement to the textured metal (like stainless steel) sheet.

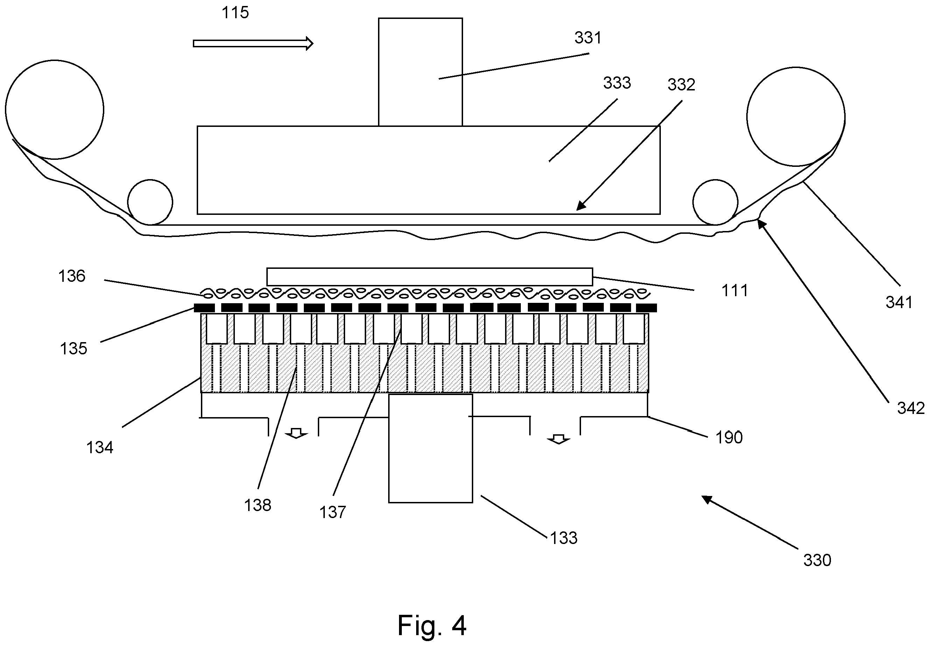

A cross section of still another alternative press 330, the section being according to a plane parallel to the direction of production and perpendicular to the surface of the fiber cement green sheets, is shown in figure 4. The features with the same reference as in figure 2, refer to similar or identical features in figure 4.

The flat press 330 comprise an upper mould element 331 having a solid metal block 333, which at its lower side 332 has a flat surface. The lower mould element 133 is identical to the one in figure 2. Between the lower side 332 of the solid metal block 333, a textured rubber sheet 341 is provided, which textured rubber sheet 341 is provided by unrolling and rolling a coil of rubber sheets in front of the lower side 332. The surface 342 of the rubber sheet 341 facing the green fiber cement sheet 111, is provided with a texture. During compression, the negative imprint of the texture provided by the rubber sheet on the lower side of the upper mould element 331 is pressed in the top side 112 of the compressed fiber cement green sheet 113. A similar pressing sequence as used for the press 130 in figure 1 may be used. The rubber sheet 341 may be forwarded over a length equal to the length of the fiber cement green sheets being compressed after being used to compress a pre-set number of fiber cement green sheets.

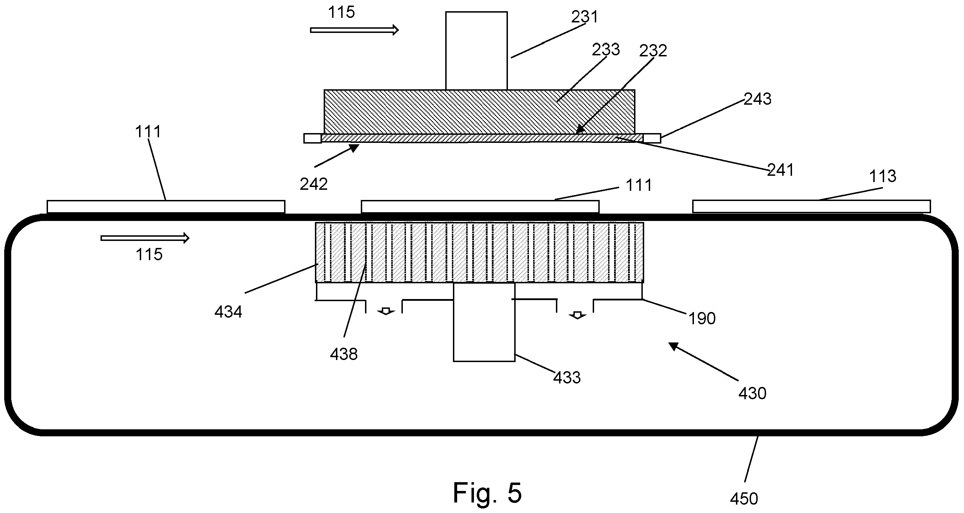

A cross section of an alternative press 430, the section being according to a plane parallel to the direction of production and perpendicular to the surface of the fiber cement green sheets, is shown in figure 5. The features with the same reference as in figure 2, 3 and/or 4, refer to similar or identical features in figure 5.

The flat press 430 comprise an upper mould element 231 being identical to the one in figure 3 is provided. A similar pressing sequence as used for the presses 130 in figure 1 may be used. The rubber sheet 241 may be removed after being used to compress a pre-set number of fiber cement green sheets. The fiber cement green sheet 111 is carried by an endless belt made form a water permeable fleece 450. By rotating and moving in the production direction 115, the water permeable fleece 450 brings the fiber cement green sheet 111 in the press 230. After compression, by rotating and moving in the production direction 115, the water permeable fleece 450 brings the compressed fiber cement green sheet 113 out of the press 230. Under the fiber cement green sheet 111 and the water permeable fleece 450, a lower mould element 433 is provided. This lower mould element comprises a bolster 433, being a solid metal block. The water permeable fleece 450 is contacting the upper surface of this bolster 433. In the bolsters surface, perforations 438, which allow water to run from the upper surface of this bolster 433 to the lower side of the bolster. The perforations may have a circular cross section with a diameter of about 4 to 6mm. The perforations are matrix-like spaced and on a distance of about 10 to 15mm centre-to-centre. Possibly, between the lower surface 242 of the rubber sheet 241 and the fiber cement green sheet 111, a thin polymer separation film or release liner may be provided to avoid sticking of the compressed fiber cement to the lower surface 242. The water leaving the green fiber cement sheet via the water permeable fleece 450 and perforations 438 is sucked away by the vacuum suction from suction means 190.

The upper mould element 231 of the press 430 may be replaced by the upper mould element of the presses as shown in figures 1, 2 or 4. As still an alternative, the textured rubber sheet 241 may be replaced by a textured metal sheet, like a textured stainless-steel sheet or a textured polymeric (optionally reinforced polymeric or composite) sheet. Possibly, between such textured metal (like stainless steel) sheet and the fiber cement green sheet 111, a thin polymer separation film or release liner may be used to avoid sticking of the compressed fiber cement to the textured metal (like stainless steel) sheet.

The rubber sheet 241 may comprise at its side opposite to the textured side, magnetic elements, which allow the rubber sheet to stick to the upper mould element 231, which is typically provided from metal. Optionally the rubber sheets 241 are held by a frame 243 which is encompassing the surface of the upper mould element.

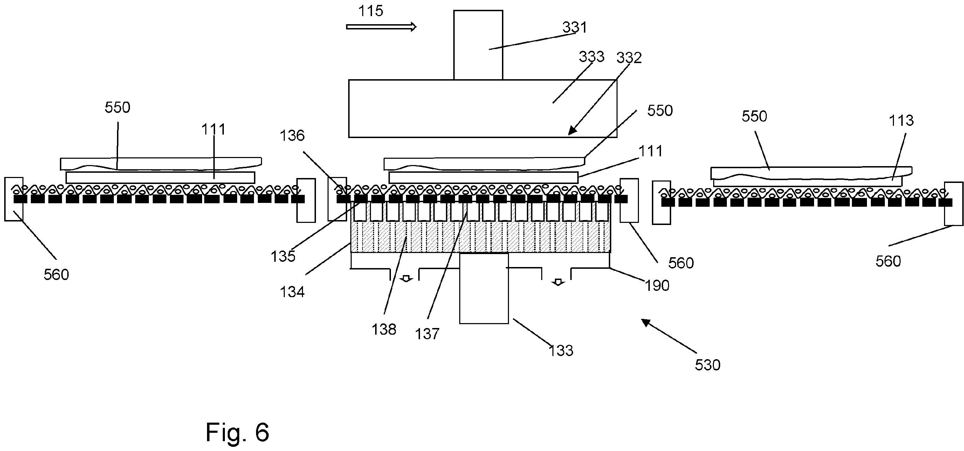

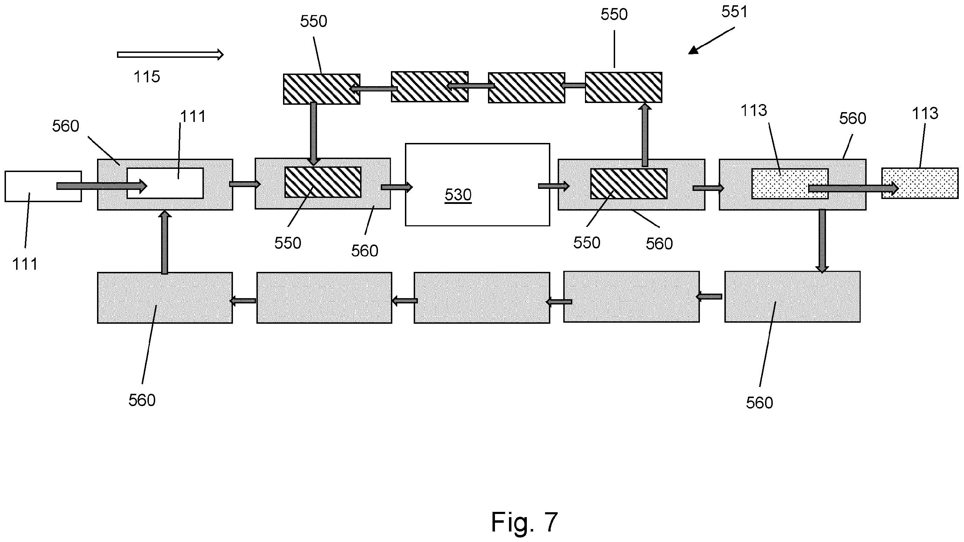

Still another alternative press 530 is shown in figure 6. A schematical top view of the alternative press 530 of figure 6 is shown in figure 7.

The press 530 comprises an upper mould element 331 having a solid metal block 333, which at its lower side 332 has a flat surface. The fiber cement green sheets 111 are provide with on their top side, a textures metal or polymeric sheet 550, the textured surface being oriented towards the fiber cement green sheet. This combination of a fiber cement green sheet 111 and a textured sheet 550, optionally being separated by a release film, is provided into the press 530 while resting on a shuttle 560. The shuttle 560 runs into the press, e.g. on two pairs of rotating wheels which run on a track (not shown in figure 6). The fiber cement green sheet 111 and a textured sheet 550 rest on a stainless steel grid-like sheet, being a mesh 136, which on its turn is supported by a perforated solid metal (stainless steel) plate 135. The mesh 136 and the perforated solid metal (stainless steel) plate 135 are firmly held in the shuttle 560. The shuttle runs in the press in the direction of production 115, such that the stack of the textured metal or polymeric sheet 550, the fiber cement green sheet 111, the mesh 136 and the perforated solid metal (stainless steel) plate 135 is positioned above the bolster 134, which on its turn is provided with channels 137 and perforations 138. Once the shuttle 560 is positioned correctly, the press 560 closes and the texture of the textured metal or polymeric sheet 550 is pressed in the top side of the provided compressed fiber cement green sheet 113. The shuttle, after compression, runs out of the press 560 in production direction 115.

As shown in figure 7, the shuttles 560 and the textured sheets 550 are each part of a carousel. The first carousel 551 circulates textured metal or polymeric sheet 550 from the output side 532 of the press 530, back to the intake side 531 of the press 530. At the intake side 531, the textured metal or polymeric sheet 550 is placed on the top side of a fiber cement green sheet 111, which on its turn is resting on a shuttle 560. The shuttle 560 takes the stack through the press 530, where the fiber cement green sheet 111 is converted into a compressed and texturized fiber cement green sheet 113. At the output side 532 of the press, the textured metal or polymeric sheet 550 is removed from the top side of the compressed fiber cement green sheet 113 and recirculated to the intake side of the press 530, optionally after being cleaned in a cleaning station (not shown in figure 7).

The second carousel 561 circulates shuttles 560 from the output side 532 of the press 530, back to the intake side 531 of the press 530. At the intake side 531, the fiber cement green sheet 111 is positioned on the mesh and the perforated sheet of the shuttle 560. After being provide with the textured sheet 550; the shuttle 560 takes the stack through the press 530, where the fiber cement green sheet 111 is converted into a compressed and texturized fiber cement green sheet 113. At the output side 532 of the press, the textured metal or polymeric sheet 550 is removed from the top side of the compressed fiber cement green sheet 113, and compressed fiber cement green sheet 113 is removed from the shuttle 560. The shuttle is recirculated to the intake side of the press 530, optionally after being cleaned in a cleaning station (not shown in figure 7).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this document that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to provide a planar fiber cement sheet, the method comprises the steps of
• providing a fiber cement green sheet having a top and bottom side;
• compressing the fiber cement green sheet between an upper and a lower mould element of a flat press, the top side of the fiber cement green sheet contacting the upper mould element and the bottom side of the fiber cement green sheet contacting to the lower mould element;
• curing the compressed fiber cement green sheet thereby providing a planar fiber cement sheet;
**characterised in that** the surface of the upper mould element of the flat press is a textured surface.

2. A method according to claim 1, wherein during the compression step, water is squeezed from the fiber cement green sheet over and/or through the surface of the lower mould element.

3. A method according to any one of the claims 1 to 2, wherein the lower mould element of the flat press comprises a bolster, a solid and perforated plate laid on the bolster, and a grid-like sheet laid on this solid perforated plate, the surface of the lower mould element of the flat press is provided by a grid-like sheet.

4. A method according to any one of the claims 1 to 2, wherein the lower mould element of the flat press comprises a bolster, preferably a bolster provided with perforations, and a water permeable felt laid or positioned on this bolster, thereby providing the surface of the lower mould element of the flat press.

5. A method according to any one of the claims 1 to 4, wherein the upper mould element of the flat press comprises a solid block, the outer surface of this solid block providing the textured surface.

6. A method according to any one of the claims 1 to 4, wherein the upper mould element of the flat press comprises a solid block, the textured surface of the upper mould element of the flat press is provided by a textured sheet provided on this solid block.

7. A method according to claim 6, wherein the textured sheet is a metal or metallic sheet.

8. A method according to claim 6, wherein the textured sheet is a polymeric sheet, preferably a rubber sheet.

9. A method according to any one of the claims 5 to 8, wherein the flat press comprises a plurality of textured surfaces, the textured surfaces being interchangeably positionable above the lower mould element.

10. A method according to any one of the claims 1 to 4, wherein the upper mould element of the flat press comprises a solid block, the textured surface of the upper mould element of the flat press is provided by a textured film provided in front of said solid block.

11. A method according to any one of the claims 1 to 10 wherein the compressed fiber cement green sheet is cured by air curing.

12. A method according to any one of the claims 1 to 10 wherein the compressed fiber cement green sheet is cured by autoclave curing.

13. A method according to any one of the claims 1 to 10 wherein the compressed fiber cement green sheet is cured by exposing the compressed fiber cement green sheet to CO₂, possibly in an atmosphere comprising more than 1000 ppm of CO₂.

14. A method according to any one of the claims 1 to 13 wherein during compression in the flat press, the water content of the fiber cement composition of the fiber cement green sheet is reduced to less than 20%w.

15. A planar fiber cement sheet provided by a method according to any one of the claims 1 to 14.
